# EUROPEAN PATENT SPECIFICATION

(11) **EP 0 937 741 B1**
(45) Date of publication and mention of the grant of the patent: **25.08.2004**
(21) Application number: 99200467.1
(22) Date of filing: 18.02.1999
(51) Int. Cl.: C08J 9/12, B29C 44/34, C08L 25/04

(54) **Process for producing a thermoplastic foam using water and an ether**
Verfahren zur Herstellung eines thermoplastischen Schaumstoffes mittels Wasser und eines Ethers
Procédé de préparation de mousse thermoplastique à l'aide d'eau et d'un ether

(30) Priority: 20.02.1998 NL 1008383
(43) Date of publication of application: 25.08.1999
(73) Proprietor: SYNBRA TECHNOLOGY B.V., 4871 NM Etten-Leur (NL)
(72) Inventor: Koning, William Waling, 5626 GL Eindhoven (NL)
(74) Representative: Van kan, Johan Joseph Hubert, Ir.

(56) References cited:
- EP-A- 0 814 119
- WO-A-93/24560
- US-A- 4 401 769
- US-A- 4 657 715
- US-A- 5 380 767
- DATABASE WPI Section Ch, Week 9529 Derwent Publications Ltd., London, GB; Class A25, AN 95-220828 XP002080598 & JP 07 133369 A (TOHO CHEM IND CO LTD) , 23 May 1995

## Description

A method for producing foam materials by means of an extrusion process, as well as a device for carrying out such a method and a foam material obtained from such a method.

The present invention relates to a method for producing foam materials by extrusion of a mixture which comprises one or more thermoplastic polymers, in particular based on styrene, blowing agents, nucleating agents as well as one or more usual additives and/or auxiliary substances. The present invention furthermore relates to a device for carrying out such a method and to a foam material, in particular a plate, obtained from such a method.

A large number of blowing agents have been proposed for producing foam materials with a base of thermoplastic polymers, in particular with a base of styrene, by means of an extrusion process.

From European patent application No. 0 464 581, for example, a method for producing foam plates having a high compression strength is known, wherein a mixture of styrene polymer, 5 - 16% by weight of a blowing agent, based on the weight of the styrene polymer, and any usual additives, is subjected to an extrusion process. A mixture which contains 3 - 70% by weight of an alcohol or ketone compound having a boiling point of 56 - 100°C, 5 - 50% by weight of carbon dioxide and 0 - 90% by weight of a saturated C₃ - C₅ hydrocarbon compound and/or a hydrogen-containing fluorochlorine or fluorocarbon compound having a boiling point ranging between -30°C and +30 °C is used as the blowing agent. One drawback of a foam plate which is produced in this manner is the fact that the final heat resistance values set relatively slowly.

US patent No. 4,424,287 discloses a method for producing thermoplastic foams of polystyrene by means of an extrusion process, wherein a blowing agent is used which is a mixture of a volatile, plasticizing organic blowing agent, mainly consisting of n-pentane, isopentane or mixtures thereof, and an atmospheric gas, such as carbon dioxide.

From German Offenlegungsschrift 39 43 265 a method for producing polystyrene foam and/or polyethylene foam or similar synthetic foams is known, wherein the plastic is plasticized in an extruder and subsequently a blowing agent is added, which blowing agent is made up of nitrogen and/or carbon dioxide and/or water and/or nitrous oxide.

US patent No. 5,149,473 discloses a method for producing insulating styrene foams wherein a blowing agent is added to the molten resin mixture, which blowing agent comprises at least a C₄-C₅ alkane compound, CO₂ and a halogenated ethane compound, wherein said halogenated ethane compound comprises less than about 70.0% by weight of the total amount of blowing agent.

Canadian patent No. 1,313,932 discloses a method for producing an extrusion-formed foamed object having a low density and a high compression strength, using a blowing agent which is essentially insoluble in the resin at room temperature, but which is soluble in the melt in the extruder. The blowing agent which is used comprises an aliphatic hydrocarbon compound, selected from the group of butane, pentane, isopentane, pentene, hexane, heptane or a mixture thereof, or a chlorofluorocarbon compound.

German Gebrauchsmuster G 92 11 584.5 relates to a moulded element made of recycled polystyrene, which moulded element is obtained by adding polystyrene foam waste to an extruder, wherein pentane is added as the blowing agent.

European patent No. 0 360 030 relates to the production of foam plates having a high compression strength and a high dimensional stability by extruding a mixture of a styrene polymer and 6 - 16% by weight of blowing agent, based on the weight of the styrene polymer, wherein said blowing agent comprises a mixture of 10 - 50% by weight of 1.1-difluoro-1-chloroethane, 10 - 50% by weight of dichlorodifluoromethane, 5 - 50% by weight of carbon dioxide, 0 - 50% by weight of saturated C₃-C₅ hydrocarbon compound and 0 - 50% by weight of monochlorodifluoromethane.

European patent application No. 0 615 830 relates to a method for producing extruded plastic foams, wherein the amount of blowing agent is controlled by means of a control valve. Nitrogen or carbon dioxide are used as the blowing agent, to which another blowing agent, preferably a hydrocarbon compound or a halogenated hydrocarbon compound is preferably added.

The drawback of the above-described prior art methods is the fact that generally a satisfactory dimensional stability and a satisfactory compression strength are no longer ensured, due to the use of blowing agents which quickly diffuse from the foam. Moreover, when blowing agents which have a high driving or blowing force are used, foam materials exhibiting a large amount of open cells are mainly obtained, which has an adverse effect on the heat insulating properties. Furthermore it is generally known that chlorine-containing blowing agents exhibit toxic properties, which makes it necessary to minimize the use of such blowing agents. Another drawback of the aforesaid blowing agents is the fact that they can only be used for a substantially homogeneous mixture of polymers.

The object of the present invention is to produce an environmentally friendly insulation foam, using environmentally friendly blowing agents. In addition, the blowing agents to be used must be widely available and they must not influence the cost price of the intended final products adversely.

Another object of the invention is to develop a method which is suitable for using a wide range of polymeric starting materials. The foams obtained by using the method must exhibit a closed cell structure, a low water absorption capacity and a high compression strength, whereby furthermore the material being obtained must be dimensionally stable and exhibit satisfactory insulating properties.

According to the invention, the method as referred to in the introduction is characterized in that the blowing agent which is used is a mixture of water and an ether compound, represented by the formula

R₁-O-R₂

wherein R₁ and R₂ represent, independently of one another, a C₁-C₃ alkane group or a C₂-C₃ alkene group, in an amount of 1 - 8% by weight, based on the weight of the extrusion mixture.

The use of an ether compound as a blowing agent for producing foam materials by extrusion of thermoplastic polymers is known per se, however.

Japanese patent application No. 60/145 835 relates to the production of a laminate plate which is provided with a polystyrene foam layer, wherein the polystyrene foam layer has been produced by means of an extrusion process, using an ether compound, such as dimethyl ether, methyl ether or methyl vinyl ether as the blowing agent. Japanese patent application 71/25 994 relates to the forming of a foam film by extrusion of a melt of polyethylene mixed with a blowing agent with a base of dimethyl ether or methyl ethyl ether. European patent No. 0 643 739 relates to the production of foam plates by extrusion of a mixture of styrene polymer and a blowing agent in an amount of 1 - 10% by weight, based on the weight of said styrene polymer, wherein the blowing agent contains 5 - 55% by weight of carbon dioxide and at least 30% by weight of an ether compound, wherein no fluorochloro compound or fluorohydrocarbon compound is used. European patent application No. 0 814 119 relates to a foam plate with a base of styrene polymers, which has a density of 20 - 200 g/l and a cross-sectional dimension of at least 50 cm², wherein a mixture of styrene polymer, 3 - 15% by weight of a volatile blowing agent, namely a mixture of carbon dioxide, an ether compound, an alcohol or ketone compound and an aliphatic hydrocarbon compound, and, as a flame-retardant agent, a mixture of at least 12% by weight, based on the weight of the styrene polymer, of a water-separating metal hydroxide and a phosphorous compound, are extruded and foamed. International patent application WO 96/11970 relates to a method for producing a polymer foam having a low density and a closed cell structure by extruding a nonlinear monovinylaromatic polymer and an ecologically acceptable blowing agent, wherein carbon dioxide, lower alcohols, C₁-C₆ hydrocarbon compounds, fluor-containing hydrocarbon compounds and dimethyl ether are used, separately or possibly as a mixture. The special use of the combination of water and an ether compound as described above as a blowing agent mixture for producing foam materials by means of an extrusion process is not known from the aforesaid publications, however.

The use of water or a water-containing mixture as a blowing agent for extruding thermoplastic polymers for producing foam materials is known per se, however.

European patent No. 0 417 405 relates to a method for producing a foam with a base of a thermoplastic polymer, wherein said thermoplastic polymer is supplied to an extruder, after which a blowing agent is injected via the wall of the extruder, which blowing agent comprises gaseous nitrogen, in an amount of 0.1 - 0.5% by weight, and liquid ethanol, propyl alcohol or butyl alcohol or mixtures of said alcohol compounds having a water content of up to 30%, in an amount of 0,5 - 5% by weight. International patent application WO 96/11097 relates to a method for producing a thermoplastic polymer foam structure by supplying a first blowing agent to the polymer melt so as to form a first foamable gel material, then cooling down said first foamable gel material to a temperature of 160 °C or lower and subsequently adding a second blowing agent to said cooled-down first foamable gel material so as to form a second foamable gel material, which second foamable gel material is subsequently extruded through an extrusion head. Carbon dioxide is used as the first blowing agent and a water-containing blowing agent is used as the second blowing agent. US patent No. 5,380,767 relates to a foamable, styrene-like polymer gel material, which comprises a flowable melt of a styrene polymer material and a blowing agent with a base of water. In order to make the styrene polymer material sufficiently soluble in water, a compatibilisation agent is added to the styrene polymer material. Alcohols, ketones, carboxylic acids, esters, ethers, aldehydes and amines are mentioned as suitable compatibilisation agents. It is not known from the above publications, which relate to the use of water as a component of the blowing agent mixture for use in the production of foam materials by extruding thermoplastic polymers, to use a mixture of the special combination of water and a special ether compound, as described above, as a blowing agent.

The ether compound to be used in the present blowing agent mixture is critical. The present ether compound is represented by the following general formula R₁-O-R₂, wherein R₁ and R₂ represent, independently of one another, a C₁-C₃ alkane group or a C₂-C₃ alkene group. If the chain length of R₁ and/or R₂ comprises more than three carbon atoms, the blowing agent mixture will exhibit a plasticizing effect on the extrusion mixture, which makes processing in the extruder problematic. In addition, a chain length of more than three carbon atoms will lead to a reduced volatility of the ether compound, so that the blowing action will be unsatisfactory. In practice, the ether compound in question must exhibit an adequate blowing force at the foaming temperature. In other words, the boiling point of the ether compound must be below the foaming temperature.

The amount of blowing agent mixture to be used in the present invention amounts to 1 - 8% by weight, based on the weight of the extrusion mixture. If this amount is higher than 8% by weight, there will be too much foaming, as a result of which a dimensionally unstable plate will be obtained. If the amount of blowing agent mixture is less than 1% by weight, a plate having an undesirably high density will be obtained. Such a plate is undesirable in practice.

In the method according to the present invention, it is preferred to use a blowing agent mixture which comprises 10 - 95% by weight, preferably 50 - 90% by weight, of the present ether compound, wherein it is in particular preferred to used dimethyl ether as the ether compound. In practice, the use of dimethyl ether has resulted in foam materials which exhibit excellent properties, for example as regards foaming force, density, compression strength, dimensional stability, surface shape and cell size. If the amount of ether compound according to the above-indicated general formula that is present in the present blowing agent mixture is less than 10% by weight, the density of the plate that is obtained will be too high. If the amount of an ether compound according to the general formula as indicated above in the present blowing agent mixture is more than 95% by weight, the dimensional stability of the plate during cooling will be unsatisfactory, as a result of which deformation will occur. Moreover, when the percentage of an ether compound according to the invention is higher than 95% by weight, the synergistic effect with water is not observed in the present blowing agent mixture.

A special advantage of the method according to the present invention is the fact that the composition of the polymeric starting material to be processed is not critical. Thus, the method according to the present invention is suitable for processing one or more thermoplastic polymers selected from the group consisting of polystyrene (PS), modified or unmodified polystyrene, polyphenylene ether (PPE), degassed polystyrene foams, such as expanded polystyrene (EPS) and extruded polystyrene (XPS), and polyethylene (PE). In addition to that, the method according to the present invention is suitable for processing a large number of polymeric waste flows. The present blowing agent mixture is also suitable for being used for polymeric starting materials, which may or may not contain pentane, such as the materials which have been mentioned above.

In the method according to the present invention, the combination of the addition of water and the present ether compound as the blowing agent results in a decreased glass transition temperature (Tg value) of the melt, which has a positive effect on the process that takes place in the melt extruder. The term positive effect is to be understood to mean that the mixing of the usual additives and/or auxiliary substances will take place more homogeneously, as a result of which possible degradation of the polymeric starting material and of the additives and/or auxiliary substances which are present therein, for example fire-retardant agents, is reduced to a minimum. Thus, the fire-retardant agents which are already present in the fire-retardant polystyrene materials are prevented from decomposing in the extruder, which would lead to the occurrence of corrosion phenomena.

In order to achieve an advantageous extrusion operation, the melt flow index value of the extrusion mixture preferably ranges from 1 - 75 ml/10 minutes, in particular from 1 - 40 ml/10 minutes, measured at a temperature of 200 °C and a load of 5 kg. If the melt flow index value is lower than 1 ml/10 minutes, the pressure build-up in the melt extruder will be too high, causing the extruder to fill up, thus blocking the inlet. If the melt flow index value is more than 75 ml/10 minutes, processing in the extruder will be problematic and it will not be possible to achieve a sufficiently high production rate.

When carrying out the method according to the present invention, it is preferred to use an extrusion mixture having a glass transition temperature of 70 - 140 °C. If the glass transition temperature is lower than 70 °C, the pressure build-up in the extruder will be too low, which will result in a separation of the blowing agent mixture and insufficient foaming, which is undesirable in practice. If the glass transition temperature of the extrusion mixture is higher than 140 °C, extrusion will be problematic, in particular as regards the pressure build-up, which will be too high. Moreover, the high glass transition temperature will cause inadequate mixing of the starting materials.

Fire-retardant agents, colouring agents, nucleating agents may be added as the usual additives and/or auxiliary substances. The nucleating agent may for example be azodicarboxylic acid diamide, talcum, sodium bicarbonate with citric acid. Hexabromium cyclododecane (HBCD) is for example used as a fire-retardant agent. Carbon black, for example, is mentioned as a colouring agent.

In order to prevent the occurrence of corrosion phenomena, a stabilising agent, for example with a base of aluminium oxide (L-55-R (brand), marketed by Reheis), or with a base of magnesium hydroxide (FR200MHRM (brand), marketed by Marlow Chemicals) is usually added to the extrusion mixture.

The method according to the present invention is preferably carried out in two series-connected extruders, wherein the extrusion mixture, which comprises one or more thermoplastic polymers, nucleating agents as well as usual additives and/or auxiliary substances, is supplied to the inlet of the first extruder via a metering device, with water and the present ether compound subsequently being supplied via inlet openings which are present on the extruder wall, downstream of the inlet of the first extruder, whereupon the mixture thus treated in the first extruder is transferred to a second extruder, after which the mixture which has been treated in the second extruder is formed into a foam, cooled and subjected to further processing.

In a special embodiment of the method according to the present invention, the speed of the extrusion mixture in the first extruder is preferably higher than in the second extruder. Due to the difference in speed of rotation, the mixing result in the first extruder will be better, whilst less friction energy (heat) will be developed in the second extruder, which has a positive effect on the cooling of the extrusion mixture, thus leading to improved physical properties of the foam that is eventually obtained. The first extruder mainly functions to mix the starting materials, whereby the mixing result can be influenced by varying the screw speed. The second extruder mainly functions as an extruder for cooling the mixture that has been treated in the first extruder. The temperature of the first extruder preferably ranges from 150 - 230 °C, and the foaming temperature at the second extruder preferably ranges from 60 - 150 °C.

The present invention furthermore relates to a device for carrying out the present method, which device is characterized in that the first extruder is connected with the second extruder via a pipe, in which static mixing elements are present. The use of such static mixing elements prevents the mixture which has been treated in the first extruder from becoming inhomogeneous, which has an adverse effect on the desired properties of the foam materials to be produced.

The present invention will be explained in more detail hereafter by means of examples and comparative examples, whereby it should be noted that the present invention is by no means limited to such special examples.

### Determination of the composition of the blowing agent mixture comprising water and an ether compound.

A polymer composition of polystyrene, polystyrene polyphenylene ether and usual auxiliary substances was subjected to an extrusion process, using various blowing agent mixtures A-H and various amounts thereof, shown on the basis of the total weight of the extrusion mixture. The results are shown in table 1, whereby it should be noted that the physical quantities were measured in accordance with NEN 7043.

**Table 1**

| mixture | percentage by weight of blowing agent relative to melt composition (based on the total weight of the extrusion mixture) | foaming force | foam density | compression strength | fire retardation | dimensional stability | surface shape | cell size |
|---|---|---|---|---|---|---|---|---|
| A | DME 0.3% | -- | --- | + | - | +++ | - | - |
| | water 0.3% | | | | | | | |
| B | DME 8.0% | +++ | Extrusion of a stable plate not possible | | | | | |
| | water 0.3% | | | | | | | |
| C | DME 4.4% | +++ | +++ | +++ | + | +++ | +++ | ++ |
| | water 0.6% | | | | | | | |
| D | methyl alcohol 4.4% | ++ | ++ | - | --- | +++ | ++ | + |
| | water 0.6% | | | | | | | |
| E | methylethyl ether 4.4% | ++ | ++ | ± | ± | ++ | + | ++ |
| | water 0.6% | | | | | | | |
| F | diethyl ether 4.4% | + | + | - | - | ± | + | ++ |
| | water 0.6% | | | | | | | |
| G | allyl ethyl ether 4.4% | + | ± | - | --- | -- | + | ± |
| | water 0.6% | | | | | | | |
| H | methylcyclopropyl | + | ± | -- | ---- | --- | + | - |
| | ether 4.4% | | | | | | | |
| | water 0.6% | | | | | | | |
| Notes: ---,-- and - = poor ± = insufficient + = sufficient ++ = good +++ = excellent | | | | | | | | |

From table 1 it is apparent that the amount of blowing agent mixture is critical. Mixtures A and B are indeed mixtures of a desired composition, but the amounts which are used are outside the present range of 1 - 8% by weight, based on the total weight of the extrusion mixture. Moreover, the composition of mixture D is not in accordance with the present invention., which leads to poor physical properties, in particular as regards the compression strength. The best result is obtained when mixture C is used.

### Comparative example 1

Degassed and compressed expanded polystyrene (EPS) having a pentane content of more than 1%, was subjected to an extrusion process, using 8% by weight of pentane, based on the total weight of the extrusion mixture, as the blowing agent. The foam plate thus obtained was examined for foaming force, foam density, compression strength, fire retardation, dimensional stability, surface shape and cell size. The results are shown in table 2.

### Comparative examples 2 - 3

The same starting material as in comparative example 1 was used, with this difference that 4.5% by weight of dimethyl ether and 2.5% by weight of water, based on the total weight of the extrusion mixture, were used as the blowing agents in comparative examples 2 and 3, respectively. The results of the foam plates thus obtained are shown in table 2.

### Comparative example 4

Degassed and compressed expanded polystyrene (EPS) having a pentane content of more than 1% and containing a fire-retardant agent, was subjected to an extrusion process, using 8% by weight of pentane, based on the total weight of the extrusion mixture, as the blowing agent. The foam plate thus obtained was examined for the same properties as comparative example 1, the results are shown in table 2.

### Comparative examples 5 - 6

The same starting materials as described in comparative example 4 were used, with this difference that 4.5% by weight of dimethyl ether and 2.5% by weight of water, based on the total weight of the extrusion mixture, were used as the blowing agents in comparative examples 5 and 6, respectively. The results are shown in table 2.

### Comparative example 7

Expanded polystyrene (EPS) which had undergone a further degassing treatment, wherein the pentane content was < 0.2%, was subjected to an extrusion process, using 4.5% by weight of dimethyl ether, based on the total weight of the extrusion mixture, as the blowing agent. The plate materials thus obtained were examined for the same properties as in comparative example 1, with the results being shown in table 2.

### Comparative example 8

The same starting material was used as described in comparative example 7, with this difference that 2.5% by weight of water, based on the total weight of the extrusion mixture, was used as the blowing agent. The results are shown in table 2.

### Example 1

The same starting material as described in comparative example 7 was subjected to an extrusion process, with this difference that a mixture of 4.4% by weight of water and 0.6% by weight of dimethyl ether, based on the total weight of the extrusion mixture, was used as the blowing agent. The results of the plate material thus obtained are shown in table 2.

### Comparative example 9

The same starting material as described in comparative example 7 was used, with this difference that the starting material comprised fire-retardant agents. In addition, 4.5% by weight of dimethyl ether, based on the total weight of the extrusion mixture, was used as the blowing agent for the extrusion. The results are shown in table 2.

### Comparative example 10

The same starting material as described in comparative example 9 was subjected to an extrusion process, wherein 2.5% by weight of water, based on the total weight of the extrusion mixture, was used as the blowing agent for the extrusion. The results are shown in table 2.

### Example 2

The same starting material as described in comparative example 9 was used, with this difference that a mixture of 4.4% by weight of dimethyl ether and 0.6% by weight of water, based on the total weight of the extrusion mixture, was used as the blowing agent. The results of the plate material thus obtained are shown in table 2.

### Example 3

A mixture of polystyrene and polystyrene-polyphenylene ether was subjected to an extrusion process, wherein a mixture of 0.6% by weight of water and 4.4% by weight of dimethyl ether, based on the total weight of the extrusion mixture, was used as the blowing agent. The results are shown in table 2.

### Example 4

The same mixture of polymers as described in example 3 and a mixture of 4.4% by weight of dimethyl ether and 0.6% by weight of water, based on the total weight of the extrusion mixture, as the blowing agent was subjected to an extrusion process, wherein 1% by weight of azodicarboxylic acid diamide, based on the total weight of the extrusion mixture, was added as a nucleating agent. The results are shown in table 2.

### Example 5

The same starting materials as described in example 4 were used, wherein moreover 0.9% by weight talcum, based on the total weight of the extrusion mixture, was added as a nucleating agent. The results are shown in table 2.

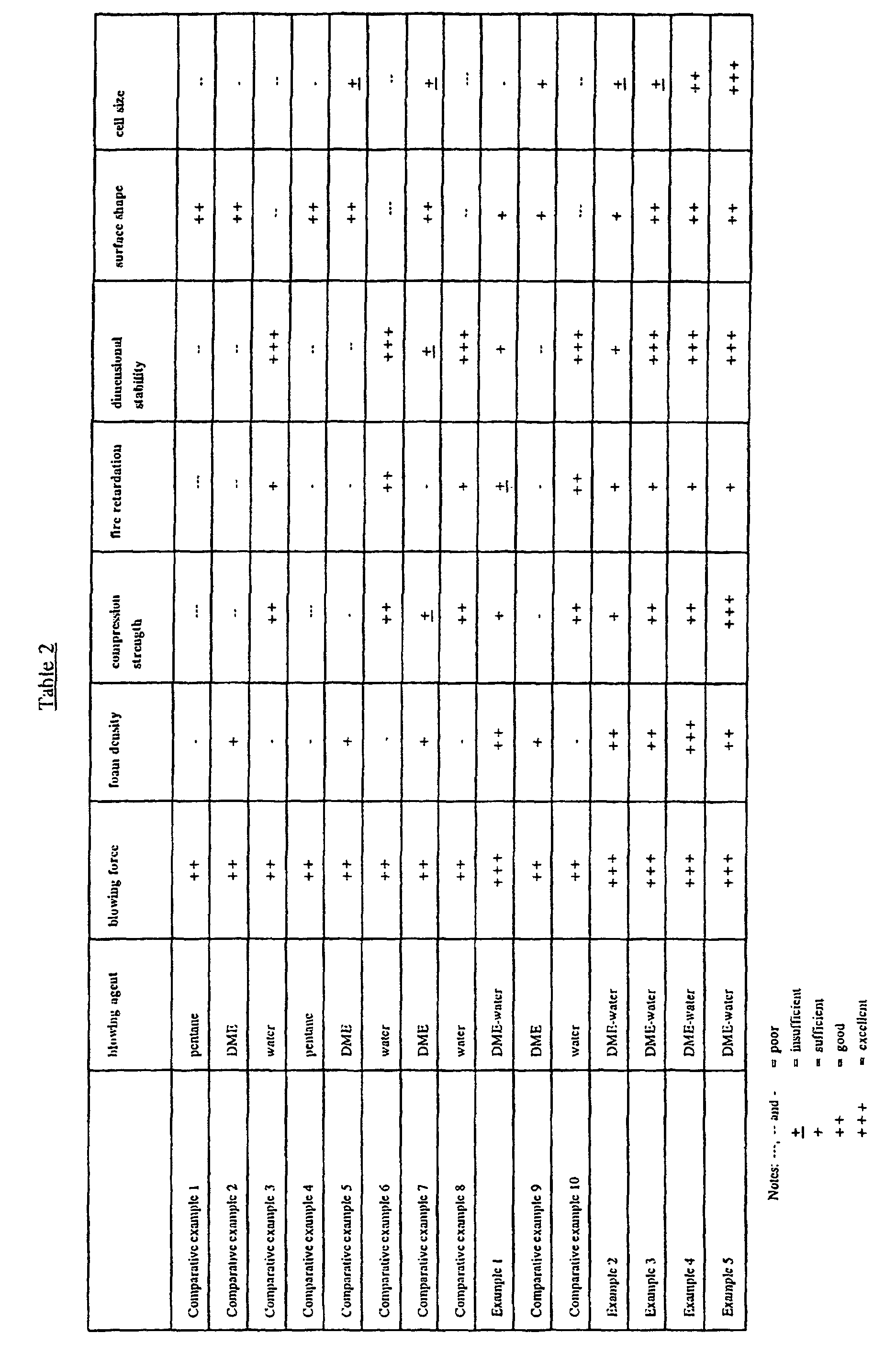

It is apparent that the use of the present blowing agent leads to improved physical properties, such as foam density, foaming force and surface shape, in comparison with a blowing agent with a base of only water or only dimethyl ether. From table 2 it can furthermore be derived that the very presence of pentane, in an amount of more than 1%, as a blowing agent in the extrusion material, in particular for comparative examples 1 - 6, leads to increased inflammability of the plate material and poor stabilisation of the dimensions during cooling, processing and storage. By first subjecting the polymeric starting materials to a degassing treatment, or by using gas-free polymer starting materials, in particular in comparative examples 8 - 10, it becomes apparent that the use of the blowing agents which are listed in table 2 leads to an improvement of the aforementioned properties, but also that said properties are still open to improvement in practice. When dimethyl ether (DME) is used as the blowing agent, the good solubility of dimethyl ether in polystyrene results in an ideal mixture of DME in polystyrene, wherein the available blowing force results in adequate foaming. After foaming, DME has an adverse effect on the dimensional stability of the foam and on the fire-retardant properties thereof. In addition, the use of water as a blowing agent leads to a more than adequate blowing force for foaming. Water-blown foam exhibits a coarse cell structure, open cells and many surface defects, because of the poor solubility of water in polystyrene and because of the absence of a fine distribution through the melt. The special combination of water and dimethyl ether, on the other hand, provides an excellent blowing agent, because dimethyl ether is soluble in water as well as in polystyrene. During the foaming process, the polystyrene cell walls will plasticize under the influence of dimethyl ether, and, together with the water, provide an excellent blowing force. Due to the good solubility of polyphenylene ether in polystyrene, the use of the mixture of polymers according to example 3 provides excellent dimensional stability, during foaming and after foaming. The presence of polyphenylene ether furthermore improves the solubility of dimethyl ether and water in polystyrene, thus providing an excellent foaming result. In addition, the presence of a fire-retardant agent, in particular hexabromiumcyclodecane, as well as the addition of talcum and azodicarboxylic acid diamide provides a nucleating effect, which leads to a decreased cell size and thus to a plate material having good heat-insulating properties.

Summarizing the above, it can be stated that the use of a blowing agent mixture with a base of water and the present ether compound leads to plate materials which exhibit excellent properties, in particular as regards dimensional stability, compression strength and cell size. The present blowing agent mixture is furthermore suitable for use in a method wherein mixtures of various thermoplastic polymers are processed into plate materials, in particular by using waste flows which are released when EPS/XPS, PS/PPE and PS/PS-PPE are being processed.

## Claims

1. A method for producing foam materials by extrusion of a mixture which comprises one or more thermoplastic polymers, in particular with a base of styrene, blowing agents, nucleating agents as well as one or more usual additives and/or auxiliary substances, **characterized in that** the blowing agent which is used is a mixture of water and an ether compound, represented by the formula
R₁-0-R₂
wherein R₁ and R₂ represent, independently of one another, a C₁-C₃ alkane group or a C₂-C₃ alkene group, in an amount of 1 - 8% by weight, based on the weight of the extrusion mixture.

2. A method according to claim 1, **characterized in that** the blowing agent mixture comprises 10 - 95% of an ether compound.

3. A method according to claim 2, **characterized in that** the blowing agent mixture comprises 50 - 95% of an ether compound.

4. A method according to claims 1 - 3, **characterized in that** dimethyl ether is used as said ether compound.

5. A method according to claim 1, **characterized in that** one or more of the following polymers, selected from the group consisting of polystyrene, modified or unmodified polystyrene, polyphenylene ether, degassed polystyrene foams and polyethylene are used.

6. A method according to claims 1 - 5, **characterized in that** the melt flow index value of the extrusion mixture preferably ranges from 1 - 75 ml/10 minutes measured at a temperature of 200 °C and a load of 5 kg.

7. A method according to any one of the preceding claims 1- 6, **characterized in that** the glass transition temperature of the extrusion mixtures ranges from 70 - 140 °C.

8. A method according to claims 1 - 7, **characterized in that** the extrusion process is carried out in two series-connected extruders, wherein the extrusion mixture, which comprises one or more thermoplastic polymers, nucleating agents as well as usual additives and/or auxiliary substances, is supplied to the inlet of the first extruder via a metering device, with water and the ether compound as disclosed in claim 1 subsequently being supplied via inlet openings which are present on the extruder wall, downstream of the inlet of the first extruder, whereupon the mixture thus treated in the first extruder is transferred to a second extruder, after which the mixture which has been treated in the second extruder is formed into a foam, cooled and subjected to further processing.

9. A method according to claim 8, **characterized in that** the flow rate of the extrusion mixture in the first extruder is higher than that in the second extruder.

10. A method according to claims 8 - 9, **characterized in that** the transfer of the contents of the first extruder to the second extruder is carried out via a pipe, which pipe is provided with static mixing elements.

11. A method according to claims 8 - 10, **characterized in that** the temperature of the first extruder ranges between 150 and 230°C.

12. A method according to claims 8 - 11, **characterized in that** the temperature of the second extruder ranges between 60 and 150 °C.

13. A method according to any one of the preceding claims 1 - 12, **characterized in that** the foam which has been treated in the second extruder is processed into a plate.

14. A device for carrying out the method as defined in any one of the preceding claims 1 - 13, **characterized in that** the first extruder is connected with the second extruder via a pipe, in which static mixing elements are present.

15. A foam material, in particular a plate, obtained by a method according to any one of the preceding claims 1 - 13.

## Patentansprüche

1. Verfahren zur Herstellung von Schaumstoffen durch Extrudieren eines Gemisches, das ein oder mehrere thermoplastische Polymere, insbesondere mit einer Basis aus Styrol, Blasmittel, Nucleierungsmittel sowie ein oder mehrere übliche Additive und/oder Hilfssubstanzen umfasst, **dadurch gekennzeichnet, dass** das verwendete Blasmittel ein Gemisch aus Wasser und einer Etherverbindung, **gekennzeichnet durch** die Formel
R₁-O-R₂
worin R₁ und R₂ unabhängig voneinander eine C₁-C₃-Alkangruppe oder eine C₂-C₃-Alkengruppe darstellen, in einer Menge von 1-8 Gew.% auf Basis des Gewichtes des Extrusionsgemisches ist.

2. Verfahren nach Anspruch 1, **dadurch gekennzeichnet, dass** das Blasmittelgemisch 10-95 % einer Etherverbindung enthält.

3. Verfahren nach Anspruch 2, **dadurch gekennzeichnet, dass** das Blasmittelgemisch 50-95 % einer Etherverbindung enthält.

4. Verfahren nach den Ansprüchen 1-3, **dadurch gekennzeichnet, dass** Dimethylether als Etherverbindung verwendet wird.

5. Verfahren nach Anspruch 1, **dadurch gekennzeichnet, dass** eines oder mehrere der folgenden Polymere verwendet wird, die aus der Gruppe ausgewählt sind, die aus Polystyrol, modifiziertem oder nichtmodifiziertem Polystyrol, Polyphenylenether, entgasten Polystyrolschaumstoffen und Polyethylen besteht.

6. Verfahren nach den Ansprüchen 1-5, **dadurch gekennzeichnet, dass** der Schmelzindex des Extrusionsgemisches vorzugsweise von 1-75 ml/10 min, gemessen bei einer Temperatur von 200 °C und einer Last von 5 kg, reicht.

7. Verfahren nach einem der vorangehenden Ansprüche 1-6, **dadurch gekennzeichnet, dass** die Glasübergangstemperatur der Extrusionsgemische von 70-140 °C reicht.

8. Verfahren nach den Ansprüchen 1-7, **dadurch gekennzeichnet, dass** der Extrusionsprozess in zwei in Reihe geschalteten Extrudern durchgeführt wird, wobei das Extrusionsgemisch, das ein oder mehrere thermoplastische Polymere, Nucleierungsmittel sowie übliche Additive und/oder Hilfssubstanzen umfasst, über eine Dosiervorrichtung dem Einlass des ersten Extruders zugeführt wird, wobei Wasser und die Etherverbindung gemäß Patentanspruch 1 danach über Einlassöffnungen, die auf der Extruderwand vorhanden sind, abstromseitig vom Einlass des ersten Extruders zugeführt werden, woraufhin das auf diese Weise im ersten Extruder behandelte Gemisch einem zweiten Extruder zugeführt wird, wonach das im zweiten Extruder behandelte Gemisch zu einem Schaumstoff geformt, abgekühlt und einer weiteren Behandlung unterzogen wird.

9. Verfahren nach Anspruch 8, **dadurch gekennzeichnet, dass** der Durchsatz des Extrusionsgemisches im ersten Extruder höher ist als der im zweiten Extruder.

10. Verfahren nach den Anspruche 8-9, **dadurch gekennzeichnet, dass** die Übertragung des Inhaltes des ersten Extruders zum zweiten Extruder über ein Rohr durchgeführt wird, das mit statischen Mischelementen versehen ist.

11. Verfahren nach den Ansprüchen 8-10, **dadurch gekennzeichnet, dass** die Temperatur des ersten Extruders zwischen 150 und 230 °C liegt.

12. Verfahren nach den Ansprüchen 8-11, **dadurch gekennzeichnet, dass** die Temperatur des zweiten Extruders zwischen 60 und 150 °C liegt.

13. Verfahren nach einem der vorangehenden Ansprüche 1-12, **dadurch gekennzeichnet, dass** der Schaumstoff, der im zweiten Extruder behandelt wurde, zu einer Platte verarbeitet wird.

14. Vorrichtung zur Durchführung des Verfahrens nach einem der vorangehenden Ansprüche 1-13, **dadurch gekennzeichnet, dass** der erste Extruder mit dem zweiten Extruder über ein Rohr verbunden ist, in dem statische Mischelemente vorhanden sind.

15. Schaumstoff, insbesondere Platte, der durch ein Verfahren nach einem der vorangehenden Ansprüche 1-13 erhalten wurde.

## Revendications

1. Un procédé de préparation de matériaux en mousse par extrusion d'un mélange qui comprend un ou plusieurs polymères thermoplastiques, en particulier avec une base de styrène, des agents gonflants, des agents nucléants ainsi qu'un ou plusieurs additifs usuels et/ou substances auxiliaires, **caractérisé en ce que** l'agent gonflant qui est utilisé est un mélange d'eau et d'un composé d'éther, représenté par la formule
R₁ - O- R₂
où R₁ et R₂ représentent, indépendamment l'un de l'autre, un groupe alcane en C₁-C₃ ou un groupe alcoylène en C₂ - C₃, dans une quantité de 1 à 8% en poids, sur la base du poids du mélange d'extrusion.

2. Un procédé selon la revendication 1, **caractérisé en ce que** le mélange d'agents gonflants comprend 10 à 95% d'un composé d'éther.

3. Un procédé selon la revendication 2, **caractérisé en ce que** le mélange d'agents gonflants comprend de 50 à 95% d'un composé d'éther.

4. Un procédé selon les revendications 1 - 3, **caractérisé en ce que** le diméthyl - éther est utilisé pour ledit composé d'éther.

5. Un procédé selon la revendication 1, **caractérisé en ce qu'**on utilise un ou plusieurs des polymères suivants, choisis dans le groupe se composant de polystyrène, de polystyrène modifié ou non modifié, de polyphénylène éther, de mousses de polystyrène dégazé et de polyéthylène.

6. Un procédé selon les revendications 1 - 5, **caractérisé en ce que** la valeur de l'indice de fusion du mélange d'extrusion est de préférence dans la gamme de 1 à 75 ml/10 minutes mesurée à une température de 200°C et une charge de 5 kg.

7. Un procédé selon une quelconque revendication 1 - 6 précédente, **caractérisé en ce que** la température de transition vitreuse des mélanges d'extrusion est dans une gamme de 70 à 140°C.

8. Un procédé selon les revendications 1 - 7, **caractérisé en ce que** le processus d'extrusion est mis en oeuvre dans deux extrudeuses reliées en série, où le mélange d'extrusion, qui comprend un ou plusieurs polymères thermoplastiques, des agents nucléants ainsi que des substances additives et/ou auxiliaires usuelles, est amené à l'entrée de la première extrudeuse par l'intermédiaire d'un dispositif de mesure, l'eau et le composé d'éther comme décrit à la revendication 1 étant ensuite amenés par l'intermédiaire d'ouvertures d'entrée qui sont présentes sur la paroi de l'extrudeuse, à l'aval de l'entrée de la première extrudeuse, à la suite de quoi le mélange ainsi traité dans la première extrudeuse est transféré vers la seconde extrudeuse, après quoi le mélange qui a été traité dans la seconde extrudeuse est formé en une mousse, refroidi et soumis à un traitement supplémentaire.

9. Un procédé selon la revendication 8, **caractérisé en ce que** le débit du mélange d'extrusion dans la première extrudeuse est plus élevé que celui dans la seconde extrudeuse.

10. Un procédé selon les revendications 8 - 9, **caractérisé en ce que** le transfert des contenus de la première extrudeuse vers la seconde extrudeuse est mis en oeuvre par l'intermédiaire d'un tuyau, ce tuyau étant muni d'éléments de mélange statiques.

11. Un procédé selon les revendications 8 - 10, **caractérisé en ce que** la température de la première extrudeuse est dans une gamme entre 150 et 230°C.

12. Un procédé selon les revendications 8 - 11, **caractérisé en ce que** la température de la seconde extrudeuse est dans une gamme entre 60 et 150°C.

13. Un procédé selon une quelconque des revendications 1 - 12 précédentes, **caractérisé en ce que** la mousse qui a été traitée dans la seconde extrudeuse est traitée pour former une plaque.

14. Un dispositif pour mettre en oeuvre le procédé tel que défini dans une quelconque des revendications 1 - 13 précédentes, **caractérisé en ce que** la première extrudeuse est reliée à la seconde extrudeuse par l'intermédiaire d'un tuyau, dans lequel sont présents des éléments de mélange statiques.

15. Un matériau en mousse, en particulier une plaque, obtenue par un procédé selon une quelconque des revendications 1 - 13 précédentes.
